# EUROPEAN PATENT SPECIFICATION

(11) **EP 1 079 308 B1**
(45) Date of publication and mention of the grant of the patent: **02.05.2007**
(21) Application number: 00402162.2
(22) Date of filing: 27.07.2000
(51) Int. Cl.: G06F 13/00, H04L 12/24, G06F 3/12, H04L 12/56, H04L 12/28, H04L 29/12

(54) **Device and method for discovering peripherals connected to a computer network.**
Vorrichtung und Verfahren zur Entdeckung von Endgeräten die zu einem Komputernetzen verbunden sind
Dispositif et procédé de découverte de périphériques connectés à un réseau informatique

(30) Priority: 26.08.1999 FR 9910808
(43) Date of publication of application: 28.02.2001
(73) Proprietor: CANON EUROPA N.V., 1185 EG Amstelveen (NL)
(72) Inventor: Moreau, Jean-Jacques, 35000 Rennes (FR)
(74) Representative: Santarelli

(56) References cited:
- EP-A- 0 809 383
- US-A- 5 790 536

## Description

The present invention concerns a method of discovering peripherals connected to a computer network.

Correlatively, it also concerns a device for discovering peripherals in a computer network.

The present invention lies in general terms within the field of computer communication networks to which there are connected several peripherals able to communicate with each other.

These peripherals can be computers, printers, scanners and in general terms any means of acquiring or storing documents, and in particular images.

Each peripheral connected to the network has an address which enables the other peripherals in the network to send it messages or exchange documents.

This address is specific to each peripheral and makes it possible to uniquely identify the peripheral on the communication network.

It is however necessary, for a peripheral to communicate with another peripheral in the network, for it to be possible to periodically know all the peripherals connected to the network and their respective data processing addresses.

It is also advantageous in some applications for a computer allocated to the surveillance of the network to automatically know the addresses of the peripherals connected to the network.

Knowing the peripherals connected to the network is all the more difficult in a wireless network where the computers and other peripherals are mobile and change network address.

Methods of discovering peripherals have been developed and are described in particular in the American patents US 5,185,860 and US 5,687,320 by the company HEWLETT-PACKARD.

In these discovery methods, a single computer is allocated to the surveillance of the network. This surveillance computer has relatively complex means adapted to regularly take stock of the information on the state of the network, and in particular on all the peripherals and their computer addresses.

In addition to the fact that this discovery method requires the presence of a computer specifically allocated to this surveillance task, essentially configured for this purpose, the method does not take advantage of the increasing abilities of the peripherals themselves to perform tasks other than their basic function.

In addition, this surveillance computer forms a bottleneck in the communication network and a weak point, since the network can no longer be managed when this surveillance computer breaks down.

The purpose of the present invention is to propose a method of discovering peripherals connected to a computer network which can be distributed between all the peripherals, or at least one of them, connected to the network.

According to the invention, the method of discovering peripherals connected to a computer network amongst a set of network addresses is implemented on at least a first peripheral in the communication network and comprises the following steps:
- random drawing of an address from amongst a set of available network addresses;
- checking on the existence or absence of a second peripheral connected to the drawn address;
   Document EP 0 809 382 A2 by the company SUN MICROSYSTEMS discloses a method of discovering peripherals connected to a computer network, the peripherals being discovered by a host or by a network manager.
   The host or the network manager send pings to devices on the network and add the discovered devices to a network topology database.
- storing in memory the existence or absence of a second peripheral in association with the drawn address in a peripherals discovery table of the first peripheral;
- eliminating the drawn address from the set of available network addresses; and
- reiterating the steps of random drawing, checking storage in memory and elimination as long as all the network addresses are not stored in the peripherals discovery table of the first peripheral.

Thus each peripheral in the network, or at least one, implements the peripheral discovery method. This method divides the discovery of the network into a certain number of rounds, each round consisting for the peripheral of drawing at random one network address amongst those available and determining whether or not another peripheral exists at this address.

It is thus possible, by virtue of this discovery method distributed over the network, to know all the peripherals connected to the same network at a given moment, without using any additional equipment

According to a preferred characteristic of the invention, this peripherals discovery method also comprises, after the step of storing in memory the existence of a second peripheral in association with the drawn address, the following steps:
- receiving a second peripherals discovery table stored on the second peripheral; and
- incorporating the second discovery table in the peripherals discovery table of the first peripheral.

The peripherals in the communication network implementing the discovery method according to the invention can thus exchange discovery information accumulated in their respective discovery table.

In practice, after a fairly short phase of starting up the method, the exchanges between peripherals increase exponentially the discovery information stored in the discovery table of each peripheral.

In addition, the random drawing of one address amongst a set of available network addresses reduces the probability that the information exchanged by two peripherals will tally with each other.

According to the invention, it is thus possible to rapidly determine, in an incremental fashion, all the peripherals connected to the network, with great tolerance to breakdowns, since the breakdown of one peripheral has a minimum effect on the overall results of the discovery method.

Preferably, the incorporation step includes the following sub-steps:
- selecting an entry in the second discovery table;
- reading an address contained in the selected entry;
- comparing the read address with a set of addresses contained in the discovery table of the first peripheral;
- adding the selected entry in the discovery table of the first peripheral when the read address is not included in the set of addresses contained in the discovery table of the first peripheral; and
- eliminating the read address from the set of available network addresses.

According to another characteristic of the invention, the discovery method also comprises a step of waiting a random period before the reiteration step.

This random waiting makes it possible to avoid all the peripherals implementing the discovery method according to the invention synchronising and the load on the network becoming periodic, that is to say consisting of periods of inactivity interspersed with high load periods.

To prevent this phenomenon, each peripheral does not wait exactly the same time.

According to a preferred characteristic of the invention, the peripherals discovery method comprises a prior step of initialising a random drawing table associating the network addresses respectively with a zero value, and in that, at the step of eliminating a read or drawn address, this address is associated in the random drawing table with an adjacent address if the adjacent address is associated with a zero value or, in the contrary case, with the non-zero value associated with this adjacent address.

This characteristic makes it possible to minimise the number of steps necessary for the drawing of an available address, that is to say an address which has not already been drawn.

In order to avoid multiple drawings, which can put a great strain on the performance of the random drawing algorithm, it is conventional to consider gradually the adjacent addresses in the random drawing table until an available address is found.

By virtue of the elimination step described above it is possible to chain addresses to each other in the random drawing table and thus limit the number of addresses to be considered at each drawing to determine the available address.

In practice, the step of random drawing of an address amongst a set of available network addresses comprises the following steps:
- generating, in a random fashion, any address amongst the set of network addresses;
- storing the generated address as a drawn address if it is associated, in the random drawing table, with a zero value; or
- in the contrary case, substituting the non-zero value as a generated address; and
- reiterating the steps of storing and substituting as long as the generated address is associated in the random drawing table with a non-zero value.

According to an advantageous characteristic of the invention, the discovery method according to the invention is implemented periodically on at least one peripheral of a computer network.

This characteristic makes it possible to regularly update the discovery information.

The frequency of implementation of this discovery method will depend in practice on the characteristics of the network to which the peripherals are connected.

Thus, in a wireless network, the discovery method can be implemented more frequently than in a cabled network, where the peripherals are generally static.

According to an advantageous characteristic, an idle phase separates each implementation of the discovery method, the duration of the idle phase being greater than or equal to the duration of the implementation of the discovery method.

This idle phase prevents congestion of the communication network.

Preferably, the peripherals discovery method also includes a prior step of initialising the peripheral discovery table after each idle phase.

It is considered in fact that it is more advantageous to acquire a new set of discovery information rather than to update the information already stored.

Correlatively, the present invention also concerns a device for discovering peripherals connected to a computer network from amongst a set of network addresses.

According to the invention, this discovery device is adapted to be incorporated in at least a first peripheral of the communication network and comprises:
- means of random drawing of an address from amongst a set of available network addresses;
- means of checking on the existence or absence of a second peripheral connected to said drawn address;
- means of storing in memory the existence or absence of a second peripheral in association with said drawn address in a peripherals discovery table of the first peripheral; and
- means of eliminating the drawn address from the set of available network addresses,
- means for iteratively using said means of random drawing, checking, storing in memory and eliminating as long as all the network addresses are not stored in the peripherals discovery table of the first peripheral.

The characteristics and advantages of this peripherals discovery device are similar to those described above for the peripherals discovery method according to the invention.

The present invention also concerns a computer, a printer, document acquisition means, a cabled network or a wireless network comprising a peripherals discovery device according to the invention.

This computer, printer, document acquisition means, cabled network and wireless network have advantages similar to those described above for the peripherals discovery method according to the invention.

The present invention also relates to a computer program stored on a storage means or information carrier, possibly removable, incorporated or not into a computer comprising portions of software code or program instructions adapted to implement the steps of the peripherals discovery method according to the invention, when the computer program is loaded into a computer.

Other particularities and advantages of the invention will also emerge from the following description.

In the accompanying drawings, given by way of non-limitative examples:
- Figure 1 illustrates a computer adapted to implement the peripherals discovery method according to the invention;
- Figure 2 is an algorithm illustrating in general terms the peripherals discovery method according to the invention;
- Figure 3 is an algorithm detailing the step of incorporating of the peripherals discovery method of Figure 2;
- Figure 4 is an algorithm detailing the step of receiving a peripheral discovery table;
- Figure 5 is an algorithm detailing the iterative implementation of the peripherals discovery method of Figure 2;
- Figure 6 is an algorithm illustrating the periodic implementation of the peripherals discovery method of Figure 2;
- Figure 7 is an algorithm illustrating the initialisation of a random drawing table of the discovery method of Figure 2;

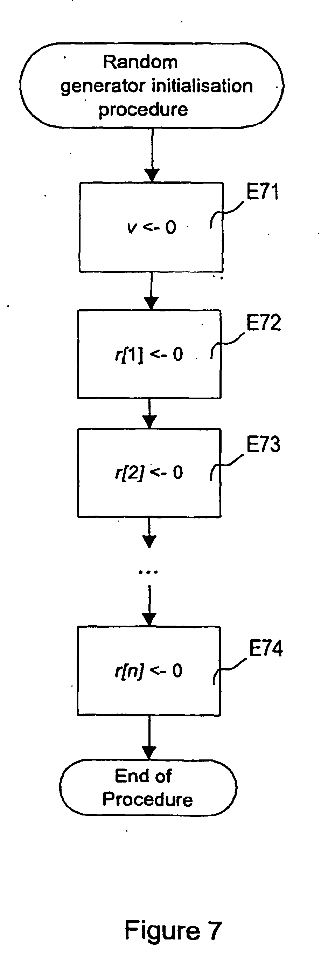

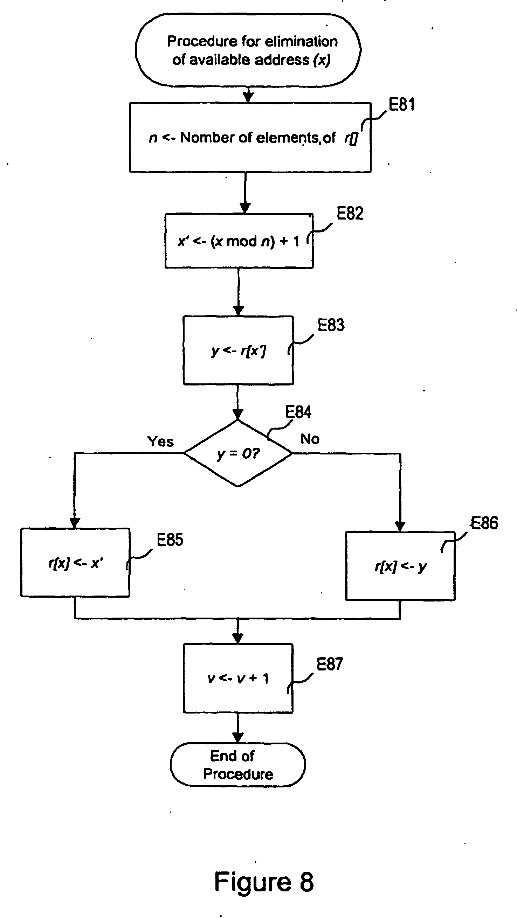

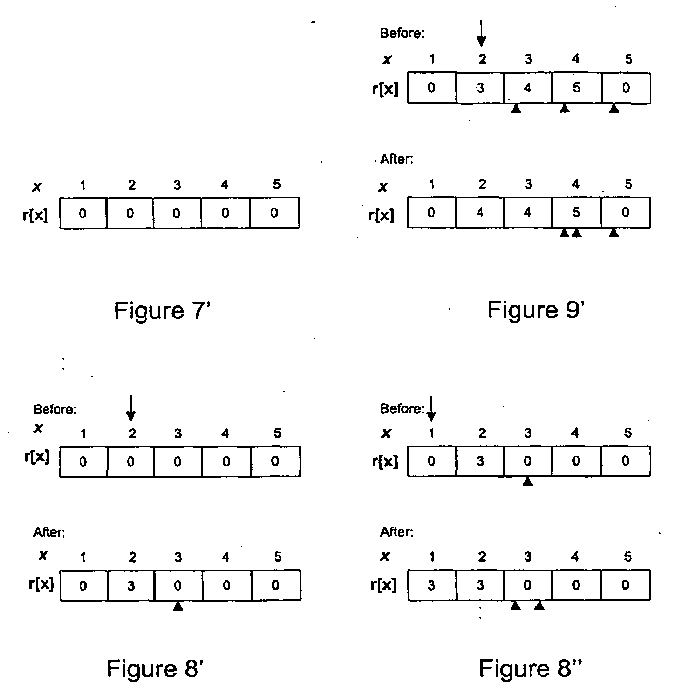

- Figure 7' depicts schematically the initialisation of the random drawing table;
- Figure 8 is an algorithm illustrating the step of eliminating an available address of the peripherals discovery method according to the invention;
- Figures 8' and 8" illustrate schematically the elimination of an available address from a random drawing table;

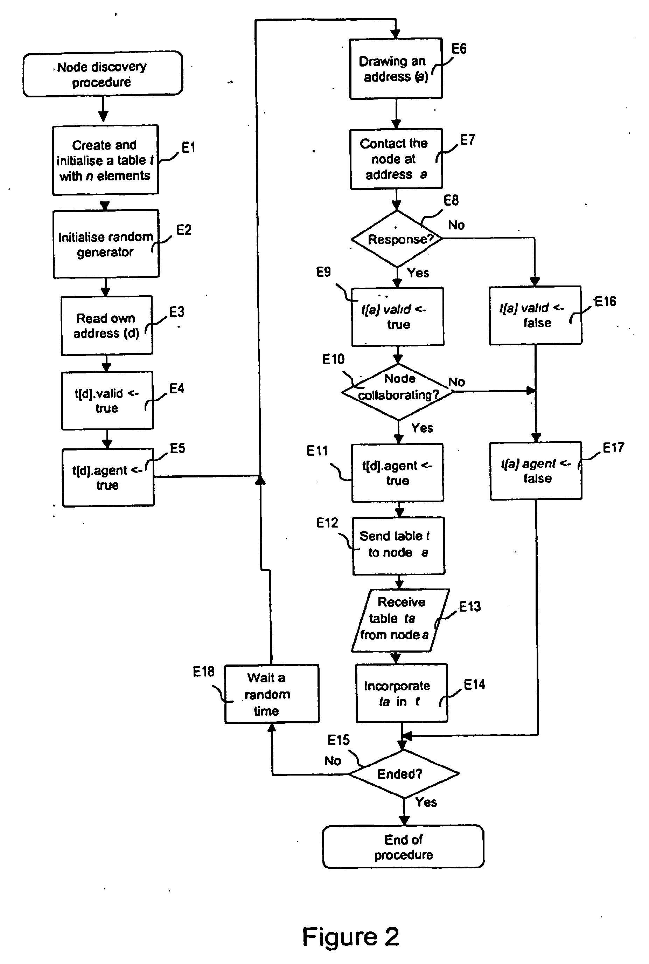

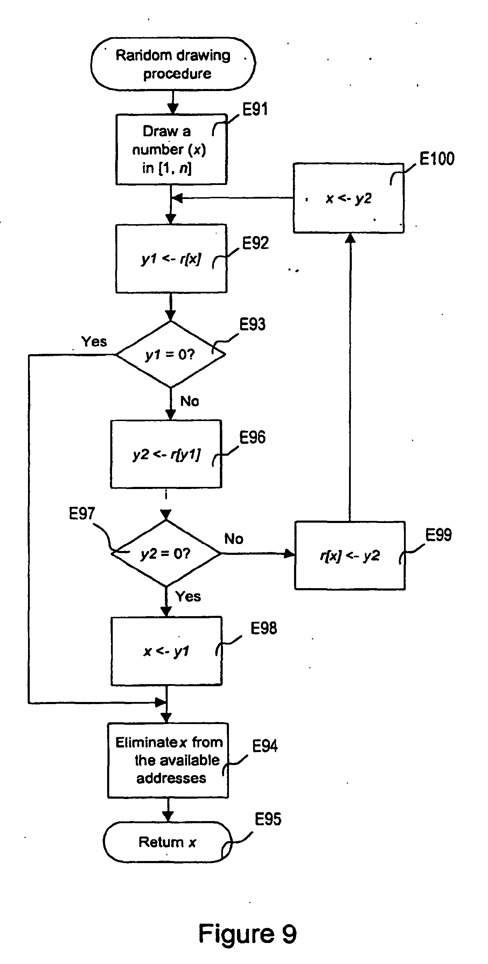

- Figure 9 is an algorithm illustrating the step of random drawing of an address of the peripherals discovery method of Figure 2; and
- Figure 9' illustrates schematically the random drawing of an available address in a random drawing table.

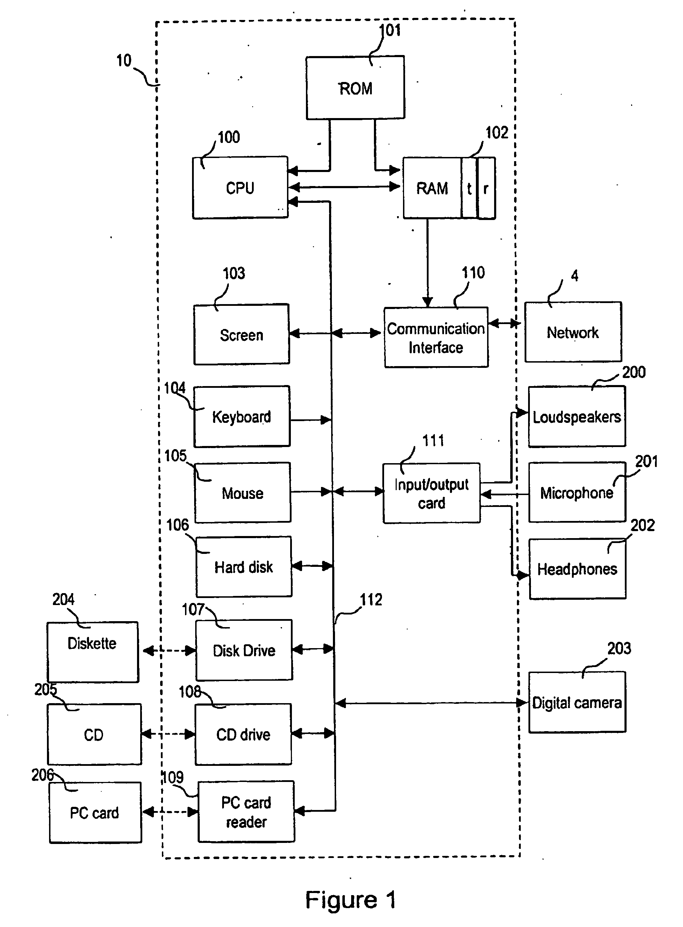

A description will first of all be given, with reference to Figure 1, of a peripherals discovery device according to one embodiment of the invention.

In this example, the peripherals discovery device is incorporated in a computer 10 connected by means of a computer network 4 to other peripherals.

Naturally, any type of peripheral used conventionally in computer communication networks is adapted to incorporate a peripherals discovery device according to the invention.

In particular, this peripheral can be a printer, a scanner, a modem, a facsimile machine, and in general terms any document acquisition or storage means.

Likewise, the computer network 4 can be either a cabled network, in which the peripherals are generally connected in a static manner, or a wireless network in which the peripherals are caused to be frequently moved, that is to say to frequently change network address.

As illustrated in Figure 1, the peripherals discovery device is incorporated in a microprocessor 100, a read only memory 101 comprising a program for discovering peripherals, and a random access memory 102 comprising registers adapted to record variables modified during the running of the program.

All the means of the peripherals discovery device according to the invention, making it possible to implement the peripherals discovery method, are incorporated in the microprocessor 100, the memory 101 and the random access memory 102.

The microprocessor 100 is integrated into the computer 10, which can be connected for example to a loudspeaker 200, a microphone 201 or headphones 202 by means of an input/output card 111 or a digital camera 203.

This computer 10 has a communication interface 110 connected to the computer communication network 4 in order to receive or send computer requests and transfer or receive documents.

The computer 10 also has document storage means, such as a hard disk 106, or is adapted to cooperate, by means of a disk drive 107, a compact disc drive 108 or a computer card reader 109, with removable document storage means, respectively for diskettes 204, compact discs (CDs) 205 or computer cards (PC cards) 206.

These fixed or removable storage means can also include the code of the peripherals discovery method according to the invention which, once read by the microprocessor 100, will be stored on the hard disk 106.

By way of variant, the program enabling the peripherals discovery device to implement the invention can be stored in the read only memory (ROM) 101.

As a second variant, the program can be received and stored as described previously by means of the communication network 4.

The computer 10 also has in a conventional manner a screen 103 for serving for example as an interface with an operator by means of the keyboard 104 or mouse 105 or any other means.

The central unit 100 will execute the instructions relating to the implementation of the invention.

On powering up, the programs and methods related to the invention stored in a non-volatile memory, for example the read only memory 101, are transferred into the random access memory (RAM) 102, which will then contain the executable code of the invention and the variables necessary for implementing the invention.

Here, and non-limitatively, the random access memory 102 contains notably a register t adapted to store a peripherals discovery table and a register r adapted to store a random drawing table.

The communication bus 112 affords communication between the different sub-elements of the computer 10 or connected to it. The representation of the bus 112 is not limitative, and in particular the microprocessor 100 is able to communicate instructions to any sub-element directly or by means of another sub-element.

On the computer communication network 4, several devices of the same type as the computer 10 described above are connected and can implement the peripherals discovery method according to the invention.

With reference to Figure 2, a description will now be given of the peripherals discovery method according to one embodiment of the invention.

This discovery method is implemented on the computer 10 as described above, which thus constitutes a first peripheral of the communication network 4.

The peripherals discovery method described below can be executed in parallel on all the peripherals connected to the network 4, or at least on some of them on which the method is implemented.

Each peripheral thus executes the same instructions, the speed at which these instructions are executed being able to be different from one peripheral to the other.

It is assumed in the remainder of the description that all the network addresses include n possible addresses.

A first initialisation step E1 makes it possible to create on the computer 10 a peripherals discovery table t capable of containing n elements corresponding to the n network addresses.

In practice, when the peripherals discovery method is implemented, the discovery table t contains information on all the peripherals present on the network.

This discovery table t thus includes a list of the peripherals in the network in association respectively with their network address.

The discovery table t will also contain the network addresses for which no peripheral is connected to the network.

A step E2 of initialising a random number generator is then implemented. This initialisation step will be described in detail below.

A reading step E3 makes it possible to obtain the address d of the peripheral 10 on which the peripherals discovery method is being executed.

A step E4 then makes it possible to indicate that there is indeed a peripheral 10 at the address d. In practice, the discovery table t is supplemented in order to store the presence of the computer 10 at the network address d.

An indication is also added to the discovery table t in a step E5 in order to indicate that the peripheral 10 is ready to exchange discovery information with the other peripherals in the network.

It should be noted that this information is not useful in itself to the computer 10, but is used by other peripherals implementing the discovery method according to the invention.

The said method next includes a step E6 of random drawing of an address a amongst a set of available network addresses.

Available addresses means the addresses which have not already been drawn and stored in the discovery table t.

This random drawing step will also be described later in the description.

In a step E7, an attempt to communicate with the node at the drawn address a is made in order to check the existence or not of a second peripheral connected at this address a.

In practice, an ICMP (Internet Control Message Protocol) packet is sent in the case of a TCP/IP network.

The computer then receives, in a step E8, a response to its ICMP request.

In the affirmative, a storage step E9 stores the existence of a second peripheral in association with the drawn address a in the discovery table t of the first peripheral 10.

On the other hand, if no peripheral exists at the drawn address a, there is stored in the discovery table t the absence or non-existence of another peripheral in a storage step E16.

Should a second peripheral have been discovered in the network at the drawn address a, a test step E10 checks whether this second peripheral wishes to share its own discovery information, that is to say transfer its own discovery table tₐ to the computer 10.

In the affirmative, the possibility of this collaboration is stored in a step E11, and then transfer steps E12 and E13 respectively send the discovery table t of the computer 10 to the second discovered peripheral and receive from this computer 10 the table tₐ from this second peripheral.

Naturally, if, at the end of the test step E10, the discovered peripheral does not collaborate, for example if the peripherals discovery method according to the invention is not implemented on this second peripheral, a storage step E17 is implemented in order to store the non-collaboration of this second peripheral located at the drawn address a.

Otherwise the discovery table tₐ is incorporated in an incorporation step E14 in the discovery table t of the computer 10.

It should also be noted that the peripherals discovery method is in this case implemented at the same time on the second discovered peripheral, so that each of these peripherals can asynchronously receive information transmitted to itself by another peripheral executing the algorithm.

A test step E15 checks whether there still exist peripherals to be discovered, that is to say available network addresses.

In the affirmative, a step of waiting for a random period E18 is implemented before the step of reiterating the steps of random drawing E6, of attempt to communicate E7, of checking E8 the existence or not of a second peripheral and incorporating E14 a second discovery table tₐ in the discovery table t.

The random duration of this waiting time at step E18 varies slightly from one peripheral to another in the network in order to avoid the peripherals discovery method being synchronised and the load on the network becoming periodically too great.

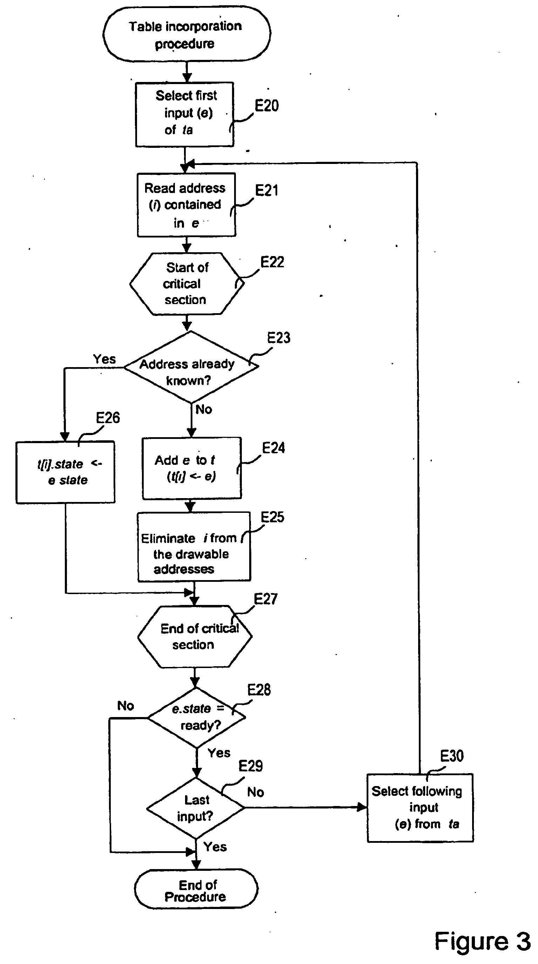

A description will now be given, with reference to Figure 3, of the step E14 of incorporating a discovery table tₐ in the discovery table t of the computer 10.

This incorporation step E14 includes first of all a step E20 of selecting an entry e in the second discovery table tₐ.

Then a reading step E21 is implemented in order to read the address i in the selected entry e.

This read address i is next compared, in a step E23, with all the addresses already stored in the discovery table t of the computer 10.

If this read address i is not included in all the addresses contained in the discovery table t of the computer 10, an addition step E24 adds the selected entry e to the discovery table t, and if applicable identifies a third peripheral located at this address i.

An elimination step E25 is then implemented in order to eliminate this address i from the available network addresses.

At the end of the comparison step E23, if the read address i is included in all the addresses contained in the discovery table t, a storage step E26 is implemented in order to store the state of the peripheral at the address i as transmitted by the discovery table tₐ.

A test step E28 checks whether the peripheral at the address i is in an idle state or is ready to collaborate.

If the peripheral is in an idle phase, the procedure of incorporating the table tₐ is interrupted.

Otherwise, it is checked, in a test step E29, that all the entries in the discovery table tₐ have been processed.

In the negative, the following entry e in the discovery table tₐ is selected in a selection step E30 and the incorporation steps E21 to E29 are reiterated.

When all the entries in the table tₐ have been processed, the incorporation step E14 is terminated.

It should also be noted that at least two algorithms are executed in parallel on each of the peripherals which implement the peripherals discovery method according to the invention, these algorithms both accessing the discovery table t.

It is then necessary to protect steps E23 to E26 in which the data in this discovery table t are modified so that only one algorithm executes them at a time.

In a conventional manner, semaphores, mutexes or any other means of protecting critical sections can be used.

A step E22 makes it possible to indicate the start of this critical section, prior to the comparison step E23, and, in a similar manner, a step E27 makes it possible to indicate the end of this critical section when the entry e has been incorporated in the discovery table t.

The step of incorporating the table t of the computer 10 in the discovery table tₐ of the second discovered peripheral at the drawn address a is implemented in a similar manner.

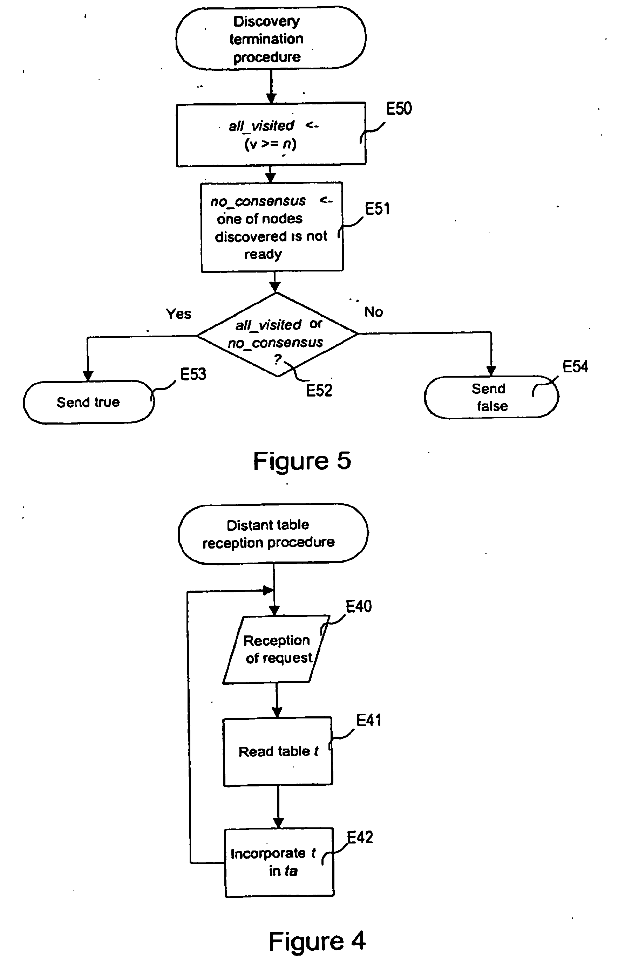

As illustrated in Figure 4, the second peripheral first of all receives, in a reception step E40, a computer request corresponding to the sending step E12 illustrated in Figure 2.

This computer request includes in particular the discovery table t of the computer 10.

A reading step E41 is then implemented to read this discovery table t and an incorporation step E42 incorporates this discovery table t in the discovery table tₐ of the second peripheral located at the drawn address a.

In addition, Figure 5 illustrates in detail the test step E15 of the peripherals discovery algorithm which makes it possible to know whether the current peripherals discovery phase must be stopped or on the contrary reiterated.

A first test step E50 checks whether all the nodes in the network have been visited.

In practice, as will be detailed below with reference to the random drawing of the addresses, a variable v can be incremented at each new address drawn in a random fashion at step E6 or read during the exchange of information with a second discovery table.

Step E50 in practice compares the value of this variable v with the number n of possible network addresses.

As soon as the value of this variable v becomes greater than or equal to the cardinal n of all the network addresses, it is deduced therefrom that all the addresses have been visited.

A second test step E51 also checks whether a peripheral discovered at a drawn address is ready to collaborate, that is to say to exchange its own discovery information.

A test step E52 terminates the current peripherals discovery process when all the network addresses have been visited or when one of the discovered nodes is not ready.

In practice, at the end of this test step E52, a response "true" is sent at step E53 so that the peripherals discovery procedure is stopped.

Otherwise, a response "false" is sent at step E54 and the peripherals discovery process is reiterated.

Thus this peripherals discovery method makes it possible to divide the discovery of the network into a certain number of turns, the exact number of turns being a function both of the size of the network, that is to say the number of network addresses available, and the number of peripherals connected to the network and implementing the invention.

Each computer 10 connected to the network and implementing the peripherals discovery method can thus acquire information on all the available addresses in the network either by itself or during exchanges effected with the other peripherals during the transfer of the discovery tables.

The peripherals discovery method is also implemented periodically on the computer 10 of the computer network.

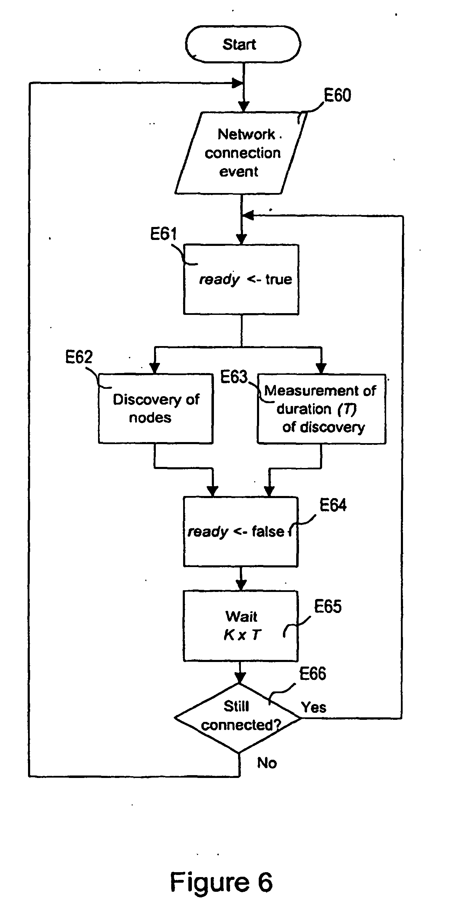

Figure 6 illustrates this periodic implementation of the method according to the invention.

A first step E60 detects the event of connecting the computer 10 to the communication network 4.

In fact, it is not possible to initiate the peripherals discovery method as long as the computer 10 is not connected to the network.

A step E61 stores the fact that the computer 10 is ready.

This information will be transmitted to the other peripherals during the transmission of the discovery information.

A discovery step E62 then implements the peripherals discovery method proper as described above with reference to Figure 2.

At the same time as this discovery step E62, a measuring step E63 measures the duration T of this discovery phase.

At the end of these steps E62 and E63, the algorithm indicates that the computer 10 is no longer ready to receive discovery information in a step E64.

An idle phase is then implemented at the end of the working phase E62.

This idle phase E65 has a duration which is greater than or equal to the duration T of the working phase in which the method of discovering the nodes E62 is implemented.

In practice, the duration of this idle phase is equal to K x T, in which K is greater than or equal to 1.

A test step E66 checks whether the computer 10, at the end of this idle phase E65, is still connected to the communication network 4.

In the affirmative, steps E61 to E65 are reiterated in order to initiate a new peripherals discovery process.

It should be noted that in this case a prior step of initialising the peripherals discovery table t is implemented, that is to say after each idle phase E65.

If, at the end of the test step E66, the computer 10 is no longer connected to the communication network 4, there is a wait until the computer 10 is once again connected to the network in order to reiterate the peripherals discovery process.

Thus each peripheral in the network can implement the peripherals discovery method at its own rate. However, in order to best manage the load on the network, the working phases and the phases of implementing the peripherals discovery method are clearly separated from the idle phases during which no discovery or updating takes place.

In particular, when a peripheral must exchange information with a peripheral which is in the idle phase, the peripherals discovery process is stopped.

This autoregulation of the peripherals provides a harmonious unfolding of the peripherals discovery method according to the invention in quite distinct phases, each of these phases being composed of several rounds.

Naturally, the frequency of the discovery phases depends in practice on the characteristics of the network to which the peripherals are connected. Thus, in a wireless network, the peripherals being moved more freely than in a cabled network, the peripherals discovery method will be implemented more frequently than in a cabled network.

It should also be noted that, when the communication network is too large, that is to say when the number of possible network addresses is very large, for example greater than 10,000, there is an advantage in partitioning the network so as form several groups of peripherals or sub-networks, the peripherals discovery method being implemented independently on each of these sub-networks.

A description will now be given, with reference to Figures 7 to 9 and 7' to 9', of a process of random drawing of one address amongst a set of available network addresses which makes it possible to effect this random drawing in an effective manner.

For this purpose a random drawing table r is used, as illustrated for example in Figure 7', which makes it possible to associate, with each address x in the network, a value r(x) indicating whether or not this address is available.

As mentioned before, the random generator is first of all initialised in a step E2 of initialising the peripherals discovery method as illustrated in Figure 2.

This step of initialising the random generator is illustrated in Figure 7.

It consists in particular of initialising to zero the number v of addresses drawn in a step E71, and then associating, in the random drawing table r, each address x with a value r[x] = 0.

In the example embodiment illustrated in Figure 7', the number of possible addresses n is equal, non-limitatively, to five.

Steps E72, E73, E74 thus respectively associate a zero value with each network address x.

Figure 8 illustrates the elimination of an address x as soon as this address x has been drawn in a random fashion or read and processed from a second discovery table tₐ transferred to the computer 10.

In a first step E81, the elimination algorithm determines the number of boxes in the random drawing table r, that is to say here equal to the number of addresses n in the communication network.

The address x' of the box adjacent to the box x to be eliminated is then calculated in a step E82. Here, in this particular embodiment of the invention in which the addresses are represented by integers included between 1 and n and classified in ascending order in the random drawing table r, the address x' of the adjacent box is given by incrementing the value of the address to be eliminated x by one unit, and considering that the neighbour of the box furthest to the right in the table as illustrated in Figure 8' is the box furthest to the left in the table. Let x' = x + 1 be this adjacent address.

Then the value y associated with this adjacent address is considered, that is to say y = r[x'].

A test step E84 checks whether or not this value y is zero.

If this value y is zero, a step E85 associates the address x in the random drawing table r with the adjacent address x', that is to say r[x] = x'.

This case corresponds to the case in which the adjacent address x' has not already been drawn or read in the peripherals discovery method and is consequently available.

This is illustrated in Figure 8', in which, when the address 2 has been drawn in a random fashion and must be eliminated and the adjacent address 3 has not yet been drawn, the value 3 is associated with the address 2, so that this address 2 points directly to the adjacent address 3.

If on the other hand, at the end of the test step E84, the value y associated with the adjacent address x' is non-zero, a step E86 is implemented in order to associate this non-zero value y with the address to be eliminated x. Let r[x] = y.

This case occurs where the adjacent address x' has already been drawn so that it points itself to a non-zero address y.

The association step E86 makes it possible to make the address to be eliminated x point directly to y by eliminating a superfluous direction corresponding to the adjacent address x'.

This situation is illustrated in Figure 8": the address 1 is drawn randomly. At the end of step E84, the value associated with the adjacent address 2, here equal to 3, being non-zero, step E86 makes the address 1 point directly to the box 3.

At the end of steps E85 and E86, a step E87 of incrementing the number of addresses drawn v is implemented.

This number v is used as described above with reference to Figure 5, in order to stop the reiteration of the peripherals discovery method according to the invention.

This algorithm for eliminating the read or drawn addresses makes it possible to link together the boxes in the random drawing table r and makes it possible to accelerate the random drawing process and the discovery of an available address.

Thus, as illustrated in Figure 9, the process of the random drawing of one address amongst a set of available network addresses comprises first of all a step E91 of generating randomly any address x amongst all the possible network addresses.

Next, in a step E92, the value y1 of the box r[x] corresponding to this drawn address x is obtained randomly in the drawing table r.

In a test step E93, it is checked whether or not this value y1 is zero.

In the affirmative, this generated address x is kept as an available drawn address and a step E94 eliminates this address x from all the available network addresses as described previously with reference to Figure 8.

At step E95, the value of this address x drawn randomly is returned in order to implement the remainder of the peripherals discovery method as described previously.

If at the end of the test step E93 the value y1 associated with the randomly generated address x is non-zero, this non-zero value y1 is substituted for the generated address and steps E92 and E93 are reiterated as long as the generated address is associated in the random drawing table r with a non-zero value.

Thus, in practice, in a step E96, the value y2 associated with the address y1 in the random drawing table is considered. Let y2 = r[y1].

If this value y2 is zero (test step E97), that is to say the address y1 has not yet been drawn or read, this address y1 is substituted for the drawn address x in a substitution step E98 and the elimination step E94 and sending step E95 are implemented using this address y1.

On the other hand, if at the test step E97 the value y2 associated with the address y1 is different from zero, that is to say the address y1 has itself already been drawn or read, the value associated with the drawn address x is replaced on the one hand, in a step E99, by the value y2, that is to say r[x] = y2, and the value y2 is substituted for this drawn address x in a step E100.

All the steps E92 to E100 are then reiterated using this new address y2.

This situation is illustrated notably in Figure 9': when the randomly drawn address x is equal to 2, the value y1 initially being equal to the address 3, at the end of step E99, the value 4 associated with this address 3 has been substituted for the value 3 previously associated with the address 2.

Thus the box 2 points directly to box 4 rather than to box 3. If during a new random drawing the address 2 is drawn, the random drawing algorithm would make it possible to pass directly to the address 4, without passing through the address 3.

It should also be noted that, in the previously described algorithm, the substitution step E99 makes it possible in fact to replace two consecutive indirections in the random drawing table r by a single one. It would of course be possible to imagine an algorithm which optimises the table r to the maximum possible extent and which for example would make, in the example illustrated in Figure 9', the box 2 point directly to the box 5 corresponding to the closest address to the address 2 which is associated with a zero value.

However, the random drawing algorithm used by the invention intentionally does not effect this optimisation in order to reduce to a minimum the steps necessary for managing the random drawing table r.

On the other hand, if in a subsequent drawing the address 2 were once again to be drawn randomly, the substitution step E99 would this time make box 2 point to box 5. On the other hand, if the address 2 is no longer drawn during the discovery phase, the step of random drawing of an address has not wasted time in unnecessarily optimising the path of the address 2 to the address 5 in the random drawing table.

Naturally, the peripherals discovery method according to the invention could be implemented using any other method of random drawing of an available address and, for example, by reiterating the random drawing amongst the possible network addresses until an available address is drawn.

## Claims

1. Method of discovering peripherals connected to a computer network (4) amongst a set of network addresses, **characterised in that** it is implemented on at least a first peripheral (10) in the communication network (4) and **in that** it comprises the following steps:
- random drawing (E6) of an address (a) from amongst a set of available network addresses;
- checking (E7, E8) on the existence or absence of a second peripheral connected to said drawn address (a);
- storing in memory (E9, E16) the existence or absence of a second peripheral in association with said drawn address (a) in a peripherals discovery table (t) of said first peripheral (10);
- eliminating (E94) the drawn address (a) from the set of available network addresses; and
- reiterating the steps of random drawing (E6), checking (E7, E8) storage in memory (E9, E16) and elimination (E94) as long as all the network addresses are not stored in said peripherals discovery table (t) of said first peripheral (10).

2. Method of discovering peripherals according to Claim 1, **characterised in that** it also comprises, after the step of storing in memory (E9) the existence of a second peripheral in association with the drawn address (a), the following steps:
- receiving (E13) a second peripherals discovery table (tₐ) stored on said second peripheral; and
- incorporating (E14) said second discovery table (tₐ) in the peripherals discovery table (t) of said first peripheral (10).

3. Method of discovering peripherals according to Claim 2, **characterised in that** said incorporation step (E14) includes the following sub-steps:
- selecting (E20) an entry (e) in said second discovery table (tₐ);
- reading (E21) an address (i) contained in said selected entry (e);
- comparing (E23) said read address (i) with a set of addresses contained in the discovery table (t) of said first peripheral (10);
- adding (E24) the selected entry (e) in the discovery table (t) of said first peripheral (10) when said read address (i) is not included in the set of addresses contained in the discovery table (t) of said first peripheral (10); and
- eliminating (E25) said read address (i) from the set of available network addresses.

4. Method of discovering peripherals according to one of Claims 1 to 3, **characterised in that** it also comprises a step of waiting (E18) a random period before said reiteration step.

5. Method of discovering peripherals according to one of Claims 1 to 4, **characterised in that** it comprises a prior step of initialising (E2) a random drawing table (r) associating the network addresses respectively with a zero value, and **in that**, at said step of eliminating (E25, E94) a read or drawn address, said address is associated in the random drawing table (r) with an adjacent address if said adjacent address is associated with a zero value or, in the contrary case, with the non-zero value associated with said adjacent address.

6. Method of discovering peripherals according to Claim 5, **characterised in that** the step of random drawing of an address amongst a set of available network addresses comprises the following steps:
- generating (E91), in a random fashion, any address (x) amongst the set of network addresses;
- storing (E92-E95) said generated address (x) as a drawn address if it is associated, in said random drawing table (r), with a zero value; or
- in the contrary case, substituting (E96-E100) said non-zero value as a generated address; and
- reiterating the steps of storing (E92-E95) and substituting (E96-E100) as long as said generated address is associated in the random drawing table (r) with a non-zero value.

7. Method of discovering peripherals according to one of Claims 1 to 6, **characterised in that** it is implemented periodically on at least one peripheral of the computer network (10).

8. Method of discovering peripherals according to Claim 7, **characterised in that** an idle phase (E65) separates each implementation of the discovery method, the duration of said idle phase being greater than or equal to the duration (T) of the implementation of the discovery method.

9. Method of discovering peripherals according to Claim 8, **characterised in that** it includes a prior step of initialising (E1) the peripheral discovery table (t) after each idle phase (E65).

10. Peripherals discovery device connected to a computer network (4) amongst a set of network addresses, **characterised in that** it is adapted to be incorporated in at least a first peripheral (10) of the communication network (4) and comprises:
- means of random drawing (100, 101, 102) of an address (a) from amongst a set of available network addresses;
- means of checking (100, 101, 102) on the existence or absence of a second peripheral connected to said drawn address (a);
- means of storing in memory (100, 101, 102) the existence or absence of a second peripheral in association with the drawn address (a) in a peripherals discovery table (t) of the first peripheral (10); and
- means of eliminating (100, 101, 102) the drawn address (a) from the set of available network addresses,
- means for iteratively using said means of random drawing, checking, storing in memory and eliminating as long as all the network addresses are not stored in the peripherals discovery table (t) of the first peripheral (10).

11. Peripherals discovery device according to Claim 10, **characterised in that** it also comprises:
- means of receiving (100, 101, 102) a second peripheral discovery table (tₐ) stored on said second peripheral; and
- means of incorporating (100, 101, 102) said second discovery table (tₐ) in the peripheral discovery table (t) of said peripheral (10).

12. Peripherals discovery device according to Claim 11, **characterised in that** the means of incorporating have:
- means of selecting (100, 101, 102) an entry (e) in the second discovery table (tₐ);
- means of reading (100, 101, 102) an address (i) contained in the selected entry (e);
- means of comparing (100, 101, 102) said read address (i) with a set of addresses contained in the discovery table (i) of the first peripheral (10);
- means of adding (100, 101, 102) the selected entry (e) in the discovery table (t) of the first peripheral (10) when said read address (i) is not included in the set of addresses contained in the discovery table (t) of said first peripheral (10); and
- means of eliminating (100, 101, 102) said read address (i) from the set of available network addresses.

13. Peripherals discovery device according to one of Claims 10 to 12, **characterised in that** it also comprises means of waiting (100, 101, 102) a random period.

14. Peripherals discovery device according to one of Claims 10 to 13, **characterised in that** it comprises means of initialising (100, 101, 102) a random drawing table (r) associating the network addresses respectively with a zero value and **in that** the means of eliminating (100, 101, 102) a read or drawn address are adapted to associate said address in the random drawing table (r) with an adjacent address if said adjacent address is associated with a zero value or, in the contrary case, with the non-zero value associated with said adjacent address.

15. Peripherals discovery device according to Claim 14, **characterised in that** the means of random drawing of an address amongst a set of available network addresses comprises:
- means of generating (100, 101, 102), in a random fashion, any address (x) amongst the set of network addresses;
- means of storing (100, 101, 102) said generated address (x) as a drawn address if it is associated, in the random drawing table (r), with a zero value; and
- means of substituting (100, 101, 102) said non-zero value as a generated address.

16. Peripherals discovery device according to one of Claims 10 to 15, **characterised in that** it has means of initialising (100, 101, 102) the peripherals discovery table (t) adapted to initialise said discovery table (t) at each periodic implementation of the peripherals discovery method.

17. Peripherals discovery device according to one of Claims 10 to 16, **characterised in that** it is adapted to be incorporated in a microprocessor (100), said peripherals discovery device further comprising a read only memory (101) being adapted to store a program for discovering peripherals on a network, and a random access memory (102) containing registers (t, r) adapted to store variables modified during the running of said program.

18. Computer, **characterised in that** it comprises means adapted to implement the peripherals discovery method according to one of Claims 1 to 9.

19. Computer, **characterised in that** it comprises a peripherals discovery device according to one of Claims 10 to 17.

20. Printer, **characterised in that** it comprises means adapted to implement the peripherals discovery method according to one of Claims 1 to 9.

21. Printer, **characterised in that** it comprises a peripherals discovery device according to one of Claims 10 to 17.

22. Means of acquiring documents, notably images, **characterised in that** it comprises means adapted to implement the peripherals discovery method according to one of Claims 1 to 9.

23. Means of acquiring documents, notably images, **characterised in that** it comprises a peripherals discovery device according to one of Claims 10 to 17.

24. Wireless communication network, **characterised in that** it comprises means adapted to implement method of discovering peripherals according to one of Claims 1 to 9.

25. Wireless communication network, **characterised in that** it has a peripherals discovery device according to one of Claims 10 to 17.

26. Cabled communication network, **characterised in that** it comprises means adapted to implement the peripherals discovery method according to one of Claims 1 to 9.

27. Cabled communication network, **characterised in that** it has a peripherals discovery device according to one of Claims 10 to 17.

28. Computer program product, loadable into a computer, **characterised in that** it comprises software code portions adapted to implement the peripherals discovery method according to one of Claims 1 to 9 when said computer program product is run on a computer.

## Patentansprüche

1. Verfahren zum Auffinden von mit einem Rechnernetz (4) verbundenen Peripheriegeräten unter einem Satz von Netzadressen, **dadurch gekennzeichnet, dass** es zumindest auf einem ersten Peripheriegerät (10) im Kommunikationsnetz (4) implementiert ist, und die folgenden Schritte umfasst
zufälliges Herausziehen (E6) einer Adresse (a) aus einem Satz verfügbarer Netzadressen,
Überprüfen (E7, E8) des Vorhandenseins oder Fehlens eines zweiten, mit der herausgezogenen Adresse (a) verbundenen Peripheriegeräts,
Speichern des Vorhandenseins oder Fehlens eines zweiten Peripheriegeräts in einem Speicher (E9, E16) in Verbindung mit der herausgezogenen Adresse (a) in einer Peripheriegeräteauffindungstabelle (t) des ersten Peripheriegeräts (10),
Entfernen (E94) der herausgezogenen Adresse (a) aus dem Satz verfügbarer Netzadressen und
Wiederholen der Schritte des zufälligen Herausziehens (E6), Überprüfens (E7, E8), der Speicherung im Speicher (E9, E16) und des Entfernens (E94), solange nicht alle Netzadressen in der Peripheriegeräteauffindungstabelle (t) des ersten Peripheriegeräts (10) gespeichert sind.

2. Verfahren zum Auffinden von Peripheriegeräten nach Anspruch 1, **dadurch gekennzeichnet, dass** es nach dem Schritt der Speicherung des Vorhandenseins eines zweiten Peripheriegeräts im Speicher (E9) in Verbindung mit der herausgezogenen Adresse (a) die folgenden Schritte umfasst
Empfangen (E13) einer zweiten Peripheriegeräteauffindungstabelle (tₐ), die in dem zweiten Peripheriegerät gespeichert ist, und
Aufnehmen (E14) der zweiten Auffindungstabelle (tₐ) in die Peripheriegeräteauffindungstabelle (t) des ersten Peripheriegeräts (10).

3. Verfahren zum Auffinden von Peripheriegeräten nach Anspruch 2, **dadurch gekennzeichnet, dass** der Aufnahmeschritt (E14) die folgenden Unterschritte umfasst
Auswählen (E20) eines Eintrags (e) in der zweiten Auffindungstabelle (tₐ),
Lesen (E21) einer in dem ausgewählten Eintrag (e) enthaltenen Adresse (i),
Vergleichen (E23) der gelesenen Adresse (i) mit einem in der Auffindungstabelle (t) des ersten Peripheriegeräts (10) enthaltenen Satz von Adressen,
Hinzufügen (E24) des ausgewählten Eintrags (e) in der Auffindungstabelle (t) des ersten Peripheriegeräts (10), wenn die gelesene Adresse (i) nicht in dem in der Auffindungstabelle (t) des ersten Peripheriegeräts (10) enthaltenen Satz von Adressen enthalten ist, und
Entfernen (E25) der gelesenen Adresse (i) aus dem Satz verfügbarer Netzadressen.

4. Verfahren zum Auffinden von Peripheriegeräten nach einem der Ansprüche 1 bis 3, **dadurch gekennzeichnet, dass** es auch einen Schritt des Wartens (E18) einen zufälligen Zeitabschnitt lang vor dem Wiederholungsschritt umfasst.

5. Verfahren zum Auffinden von Peripheriegeräten nach einem der Ansprüche 1 bis 4, **dadurch gekennzeichnet, dass** es einen Vorabschritt der Initialisierung (E2) einer Zufallsauszugstabelle (r) umfasst, die die Netzadressen jeweils mit einem Nullwert verbindet, und dass im Schritt des Entfernens (E25, E94) einer gelesenen oder herausgezogenen Adresse die Adresse in der Zufallsauszugstabelle (r) mit einer angrenzenden Adresse verbunden wird, wenn die angrenzende Adresse mit einem Nullwert verbunden ist, oder im anderen Fall mit dem mit der angrenzenden Adresse verbundenen Nicht-Nullwert verbunden wird.

6. Verfahren zum Auffinden von Peripheriegeräten nach Anspruch 5, **dadurch gekennzeichnet, dass** der Schritt des zufälligen Herausziehens einer Adresse aus einem Satz verfügbarer Netzadressen die folgenden Schritte umfasst
Erzeugen (E91) einer Adresse (x) aus dem Satz der Netzadressen auf zufällige Weise,
Speichern (E92-E95) der erzeugten Adresse (x) als herausgezogene Adresse, wenn sie in der Zufallsauszugstabelle (r) mit einem Nullwert verbunden ist, oder
im anderen Fall, Einsetzen (E96-E100) des Nicht-Nullwerts als erzeugte Adresse, und
Wiederholen der Schritte der Speicherung (E92-E95) und des Einsetzens (E96-E100), solange die erzeugte Adresse in der Zufallsauszugstabelle (r) mit einem Nicht-Nullwert verbunden ist.

7. Verfahren zum Auffinden von Peripheriegeräten nach einem der Ansprüche 1 bis 6, **dadurch gekennzeichnet, dass** es periodisch zumindest auf einem Peripheriegerät des Rechnernetzes (10) implementiert ist.

8. Verfahren zum Auffinden von Peripheriegeräten nach Anspruch 7, **dadurch gekennzeichnet, dass** eine Leerlaufphase (E65) jede Implementierung des Auffindeverfahrens trennt, wobei die Dauer der Leerlaufphase größer oder gleich der Dauer (T) der Implementierung des Auffindeverfahrens ist.

9. Verfahren zum Auffinden von Peripheriegeräten nach Anspruch 8, **dadurch gekennzeichnet, dass** es einen Vorabschritt der Initialisierung (E1) der Peripheriegeräteauffindungstabelle (t) nach jeder Leerlaufphase (E65) enthält.

10. Peripheriegeräteauffindevorrichtung, die mit einem Rechnernetz (4) verbunden ist, aus einem Satz von Netzadressen, **dadurch gekennzeichnet, dass** sie zum Aufgenommen werden in zumindest einem ersten Peripheriegerät (10) des Kommunikationsnetzes (4) eingerichtet ist, und
eine Einrichtung zum zufälligen Herausziehen (100, 101, 102) einer Adresse (a) aus einem Satz verfügbarer Netzadressen,
eine Einrichtung zum Überprüfen (100, 101, 102) des Vorhandenseins oder Fehlens eines zweiten, mit der herausgezogenen Adresse (a) verbundenen Peripheriegeräts,
eine Einrichtung zur Speicherung des Vorhandenseins oder Fehlens eines zweiten Peripheriegeräts im Speicher (100, 101, 102) in Verbindung mit der herausgezogenen Adresse (a) in einer Peripheriegeräteauffindungstabelle (t) des ersten Peripheriegeräts (10) und
eine Einrichtung zum Entfernen (100, 101, 102) der herausgezogenen Adresse (a) aus dem Satz verfügbarer Netzadressen,
eine Einrichtung zum wiederholten Verwenden der Einrichtungen zum zufälligen Herausziehen, Überprüfen, Speichern im Speicher und Entfernen solange nicht alle Netzadressen in der Peripheriegeräteauffindungstabelle (t) des ersten Peripheriegeräts (10) gespeichert sind, umfasst.

11. Peripheriegeräteauffindevorrichtung nach Anspruch 10, **gekennzeichnet durch**
eine Einrichtung zum Empfangen (100, 101, 102) einer auf dem zweiten Peripheriegerät gespeicherten zweiten Peripheriegeräteauffindungstabelle (tₐ) und
eine Einrichtung zum Aufnehmen (100, 101, 102) der zweiten Auffindungstabelle (tₐ) in die Peripheriegeräteauffindungstabelle (t) des Peripheriegeräts (10).

12. Peripheriegeräteauffindevorrichtung nach Anspruch 11, **dadurch gekennzeichnet, dass** die Einrichtung zum Aufnehmen umfasst
eine Einrichtung zum Auswählen (100, 101, 102) eines Eintrags (e) in der zweiten Auffindungstabelle (tₐ),
eine Einrichtung zum Lesen (100, 101, 102) einer in dem ausgewählten Eintrag (e) enthaltenen Adresse (i),
eine Einrichtung zum Vergleichen (100, 101, 102) der gelesenen Adresse (i) mit einem in der Auffindungstabelle (t) des ersten Peripheriegeräts (10) enthaltenen Satz von Adressen,
eine Einrichtung zum Hinzufügen (100, 101, 102) des ausgewählten Eintrags (e) in der Auffindungstabelle (t) des ersten Peripheriegeräts (10), wenn die gelesene Adresse (i) nicht in dem in der Auffindungstabelle (t) des ersten Peripheriegeräts (10) enthaltenen Satz von Adressen enthalten ist, und
eine Einrichtung zum Entfernen (100, 101, 102) der gelesenen Adresse (i) aus dem Satz verfügbarer Netzadressen.

13. Peripheriegeräteauffindevorrichtung nach einem der Ansprüche 10 bis 12, **dadurch gekennzeichnet, dass** sie eine Einrichtung zum Warten (100, 101, 102) einen zufälligen Zeitabschnitt lang umfasst.

14. Peripheriegeräteauffindevorrichtung nach einem der Ansprüche 10 bis 13, **dadurch gekennzeichnet, dass** sie eine Einrichtung zum Initialisieren (100, 101, 102) einer Zufallsauszugstabelle (r) umfasst, die die Netzadressen jeweils mit einem Nullwert verbindet, und dass die Einrichtung zum Entfernen (100, 101, 102) einer gelesenen oder herausgezogenen Adresse zum Verbinden der Adresse in der Zufallsauszugstabelle (r) mit einer angrenzenden Adresse, wenn die angrenzende Adresse mit einem Nullwert verbunden ist, oder im anderen Fall mit dem mit der angrenzenden Adresse verbundenen Nicht-Nullwert eingerichtet ist.

15. Peripheriegeräteauffindevorrichtung nach Anspruch 14, **dadurch gekennzeichnet, dass** die Einrichtung zum zufälligen Herausziehen einer Adresse aus einem Satz verfügbarer Netzadressen
eine Einrichtung zum Erzeugen (100, 101, 102) einer Adresse (x) aus dem Satz von Netzadressen auf zufällige Weise,
eine Einrichtung zum Speichern (100, 101, 102) der erzeugten Adresse (x) als herausgezogene Adresse, wenn sie in der Zufallsauszugstabelle (r) mit einem Nullwert verbunden ist, und
eine Einrichtung zum Einsetzen (100, 101, 102) des Nicht-Nullwerts als erzeugte Adresse umfasst.

16. Peripheriegeräteauffindevorrichtung nach einem der Ansprüche 10 bis 15, **dadurch gekennzeichnet, dass** sie eine Einrichtung zum Initialisieren (100, 101, 102) der Peripheriegeräteauffindungstabelle (t) zum Initialisieren der Auffindungstabelle (t) bei jeder periodischen Implementierung des Peripheriegeräteauffindungsverfahrens umfasst.

17. Peripheriegeräteauffindevorrichtung nach einem der Ansprüche 10 bis 16, **dadurch gekennzeichnet, dass** sie zur Aufnahme in einen Mikroprozessor (100) eingerichtet ist, wobei die Peripheriegeräteauffindevorrichtung ferner einen Nur-Lese-Speicher (101) zum Speichern eines Programms zum Auffinden von Peripheriegeräten in einem Netz und einen Zufallszugriffsspeicher (102) mit Registern (t, r) zur Speicherung von Variablen umfasst, die während des Ablaufens des Programms modifiziert werden.

18. Computer, **dadurch gekennzeichnet, dass** er eine Einrichtung zum Implementieren des Peripheriegeräteauffindeverfahrens nach einem der Ansprüche 1 bis 9 umfasst.

19. Computer, **dadurch gekennzeichnet, dass** er eine Peripheriegeräteauffindevorrichtung nach einem der Ansprüche 10 bis 17 umfasst.

20. Drucker, **dadurch gekennzeichnet, dass** er eine Einrichtung zum Implementieren des Peripheriegeräteauffindeverfahrens nach einem der Ansprüche 1 bis 9 umfasst.

21. Drucker, **dadurch gekennzeichnet, dass** er eine Peripheriegeräteauffindevorrichtung nach einem der Ansprüche 10 bis 17 umfasst.

22. Einrichtung zum Erfassen von Dokumenten, insbesondere von Bildern, **dadurch gekennzeichnet, dass** sie eine Einrichtung zum Implementieren des Peripheriegeräteauffindeverfahrens nach einem der Ansprüche 1 bis 9 umfasst.

23. Einrichtung zum Erfassen von Dokumenten, insbesondere von Bildern, **dadurch gekennzeichnet, dass** sie eine Peripheriegeräteauffindevorrichtung nach einem der Ansprüche 10 bis 17 umfasst.

24. Drahtloses Kommunikationsnetz, **dadurch gekennzeichnet, dass** es eine Einrichtung zum Implementieren eines Verfahrens zum Auffinden von Peripheriegeräten nach einem der Ansprüche 1 bis 9 umfasst.

25. Drahtloses Kommunikationsnetz, **dadurch gekennzeichnet, dass** es eine Peripheriegeräteauffindevorrichtung nach einem der Ansprüche 10 bis 17 umfasst.

26. Kabelkommunikationsnetz, **dadurch gekennzeichnet, dass** es eine Einrichtung zum Implementieren des Peripheriegeräteauffindeverfahrens nach einem der Ansprüche 1 bis 9 umfasst.

27. Kabelkommunikationsnetz, **dadurch gekennzeichnet, dass** es eine Peripheriegeräteauffindevorrichtung nach einem der Ansprüche 10 bis 17 umfasst.

28. Computerprogrammprodukt, das in einen Computer geladen werden kann, **dadurch gekennzeichnet, dass** es Softwarekodeabschnitte zum Implementieren des Peripheriegeräteauffindeverfahrens nach einem der Ansprüche 1 bis 9 umfasst, wenn das Computerprogrammprodukt auf einem Computer läuft.

## Revendications

1. Procédé de découverte de périphériques connectés à un réseau informatique (4) parmi un ensemble d'adresses réseau, **caractérisé en ce qu'**il est mis en oeuvre sur au moins un premier périphérique (10) du réseau de communication (4) et **en ce qu'**il comprend les étapes suivantes :
- tirage aléatoire (E6) d'une adresse (a) parmi un ensemble d'adresses réseau disponibles ;
- vérification (E7, E8) de l'existence ou de l'absence d'un deuxième périphérique connecté à ladite adresse tirée (a) ;
- mémorisation (E9, E16) de l'existence ou de l'absence d'un deuxième périphérique en association avec ladite adresse tirée (a) dans un tableau de découverte de périphériques (t) dudit premier périphérique (10) ;
- suppression (E94) de l'adresse tirée (a) de l'ensemble d'adresses réseau disponibles ; et
- réitération des étapes de tirage aléatoire (E6), de vérification (E7, E8), de mémorisation (E9, E16) et de suppression (E94) tant que l'ensemble des adresses réseau n'est pas mémorisé dans ledit tableau de découverte de périphériques (t) dudit premier périphérique (10).

2. Procédé de découverte de périphériques conforme à la revendication 1, **caractérisé en ce qu'**il comprend en outre, après l'étape de mémorisation (E9) de l'existence d'un deuxième périphérique en association avec l'adresse tirée (a), les étapes suivantes :
- réception (E13) d'un deuxième tableau de découverte de périphériques (tₐ) mémorisé sur ledit deuxième périphérique ; et
- incorporation (E14) dudit deuxième tableau de découverte (tₐ) dans le tableau de découverte de périphériques (t) dudit premier périphérique (10).

3. Procédé de découverte de périphériques conforme à la revendication 2, **caractérisé en ce que** ladite étape d'incorporation (E14) comporte les sous-étapes suivantes :
- sélection (E20) d'une entrée (e) dans ledit deuxième tableau de découverte (tₐ) ;
- lecture (E21) d'une adresse (i) contenue dans ladite entrée sélectionnée (e) ;
- comparaison (E23) de ladite adresse lue (i) avec un ensemble d'adresses contenues dans le tableau de découverte (t) dudit premier périphérique (10) ;
- ajout (E24) de l'entrée sélectionnée (e) dans le tableau de découverte (t) dudit premier périphérique (10) lorsque ladite adresse lue (i) n'est pas incluse dans l'ensemble d'adresses contenues dans le tableau de découverte (t) dudit premier périphérique (10) ; et
- suppression (E25) de ladite adresse lue (i) de l'ensemble des adresses réseau disponibles.

4. Procédé de découverte de périphériques conforme à l'une des revendications 1 à 3, **caractérisé en ce qu'**il comprend en outre une étape d'attente (E18) d'une durée aléatoire avant ladite étape de réitération.

5. Procédé de découverte de périphériques conforme à l'une des revendications 1 à 4, **caractérisé en ce qu'**il comprend une étape préalable d'initialisation (E2) d'un tableau de tirage aléatoire (r) associant les adresses réseau respectivement à une valeur nulle et **en ce qu'**à ladite étape de suppression (E25, E94) d'une adresse lue ou tirée, on associe ladite adresse dans le tableau de tirage aléatoire (r) à une adresse voisine si ladite adresse voisine est associée à une valeur nulle ou, dans le cas contraire, à la valeur non nulle associée à ladite adresse voisine.

6. Procédé de découverte de périphériques conforme à la revendication 5, **caractérisé en ce que** l'étape de tirage aléatoire d'une adresse parmi un ensemble d'adresses réseau disponibles comprend les étapes suivantes :
- génération (E91) de manière aléatoire d'une adresse quelconque (x) parmi l'ensemble des adresses réseau ;
- conservation (E92-E95) de ladite adresse générée (x) comme adresse tirée si elle est associée dans ledit tableau de tirage aléatoire (r) à une valeur nulle ; ou
- dans le cas contraire, substitution (E96-E100) de ladite valeur non nulle comme adresse générée ; et
- réitération des étapes de conservation (E92-E95) et de substitution (E96-E100) tant que ladite adresse générée est associée dans le tableau de tirage aléatoire (r) à une valeur non nulle.

7. Procédé de découverte de périphériques conforme à l'une des revendications 1 à 6, **caractérisé en ce qu'**il est mis en oeuvre périodiquement sur au moins un périphérique du réseau informatique (10).

8. Procédé de découverte de périphériques conforme à la revendication 7, **caractérisé en ce qu'**une phase de repos (E65) sépare chaque mise en oeuvre dudit procédé de découverte, la durée de ladite phase de repos étant supérieure ou égale à la durée (T) de la mise en oeuvre du procédé de découverte.

9. Procédé de découverte de périphériques conforme à la revendication 8, **caractérisé en ce qu'**il comporte une étape préalable d'initialisation (E1) du tableau de découverte de périphériques (t) après chaque phase de repos (E65).

10. Dispositif de découverte de périphériques connecté à un réseau informatique (4) parmi un ensemble d'adresses réseau, **caractérisé en ce qu'**il est adapté à être incorporé dans au moins un premier périphérique (10) du réseau de communication (4) et comprend :
- des moyens de tirage aléatoire (100, 101, 102) d'une adresse (a) parmi un ensemble d'adresses réseau disponibles ;
- des moyens de vérification (100, 101, 102) de l'existence ou de l'absence d'un deuxième périphérique connecté à ladite adresse tirée (a) ;
- des moyens de mémorisation (100, 101, 102) de l'existence ou de l'absence d'un deuxième périphérique en association avec ladite adresse tirée (a) dans un tableau de découverte de périphériques (t) du premier périphérique (10) ; et
- des moyens de suppression (100, 101, 102) de l'adresse tirée (a) de l'ensemble d'adresses réseau disponibles ; et
- des moyens d'utilisation itérative desdits moyens de tirage aléatoire, de vérification, de mémorisation et de suppression tant que l'ensemble des adresses réseau n'est pas mémorisé dans le tableau de découverte de périphériques (t) du premier périphérique (10).

11. Dispositif de découverte de périphériques conforme à la revendication 10, **caractérisé en ce qu'**il comprend en outre :
- des moyens de réception (100, 101, 102) d'un deuxième tableau de découverte de périphériques (tₐ) mémorisé sur ledit deuxième périphérique ; et
- des moyens d'incorporation (100, 101, 102) dudit deuxième tableau de découverte (tₐ) dans le tableau de découverte de périphériques (t) dudit périphérique (10).

12. Dispositif de découverte de périphériques conforme à la revendication 11, **caractérisé en ce que** les moyens d'incorporation comportent :
- des moyens de sélection (100, 101, 102) d'une entrée (e) dans le deuxième tableau de découverte (tₐ) ;
- des moyens de lecture (100, 101, 102) d'une adresse (i) contenue dans l'entrée sélectionnée (e) ;
- des moyens de comparaison (100, 101, 102) de ladite adresse lue (i) avec un ensemble d'adresses contenues dans le tableau de découverte (t) du premier périphérique (10) ;
- des moyens d'ajout (100, 101, 102) de l'entrée sélectionnée (e) dans le tableau de découverte (t) du premier périphérique (10) lorsque ladite adresse lue (i) n'est pas incluse dans l'ensemble d'adresses contenues dans le tableau de découverte (t) dudit premier périphérique (10) ; et
- des moyens de suppression (100, 101, 102) de ladite adresse lue (i) de l'ensemble des adresses réseau disponibles.

13. Dispositif de découverte de périphériques conforme à l'une des revendications 10 à 12, **caractérisé en ce qu'**il comprend en outre des moyens d'attente (100, 101, 102) d'une durée aléatoire.

14. Dispositif de découverte de périphériques conforme à l'une des revendications 10 à 13, **caractérisé en ce qu'**il comprend des moyens d'initialisation (100, 101, 102) d'un tableau de tirage aléatoire (r) associant les adresses réseau respectivement à une valeur nulle et **en ce que** les moyens de suppression (100, 101, 102) d'une adresse lue ou tirée sont adaptés à associer ladite adresse dans le tableau de tirage aléatoire (r) à une adresse voisine si ladite adresse voisine est associée à une valeur nulle ou, dans le cas contraire, à la valeur non nulle associée à ladite adresse voisine.

15. Dispositif de découverte de périphériques conforme à la revendication 14, **caractérisé en ce que** les moyens de tirage aléatoire d'une adresse parmi un ensemble d'adresses réseau disponibles comprennent :
- des moyens de génération (100, 101, 102) de manière aléatoire d'une adresse quelconque (x) parmi l'ensemble des adresses réseau ;
- des moyens de conservation (100, 101, 102) de ladite adresse générée (x) comme adresse tirée si elle est associée dans ledit tableau de tirage aléatoire (r) à une valeur nulle ; et
- des moyens de substitution (100, 101, 102) de ladite valeur non nulle comme adresse générée.

16. Dispositif de découverte de périphériques conforme à l'une des revendications 10 à 15, **caractérisé en ce qu'**il comporte des moyens d'initialisation (100, 101, 102) du tableau de découverte de périphériques (t), adaptés à initialiser ledit tableau de découverte (t) à chaque mise en oeuvre périodique du procédé de découverte de périphériques.

17. Dispositif de découverte de périphériques conforme à l'une des revendications 10 à 16, **caractérisé en ce qu'**il est adapté à être incorporé dans un microprocesseur (100), ledit dispositif de découverte de périphériques comprenant en outre une mémoire morte (101) étant adaptée à mémoriser un programme de découverte de périphériques sur un réseau et une mémoire vive (102) comportant des registres (t, r) adaptés à mémoriser des variables modifiées lors de l'exécution dudit programme.

18. Ordinateur, **caractérisé en ce qu'**il comprend des moyens adaptés à mettre en oeuvre le procédé de découverte de périphériques conforme à l'une des revendications 1 à 9.

19. Ordinateur, **caractérisé en ce qu'**il comprend un dispositif de découverte de périphériques conforme à l'une des revendications 10 à 17.

20. Imprimante, **caractérisée en ce qu'**elle comprend des moyens adaptés à mettre en oeuvre le procédé de découverte de périphériques conforme à l'une des revendications 1 à 9.

21. Imprimante, **caractérisée en ce qu'**elle comprend un dispositif de découverte de périphériques conforme à l'une des revendications 10 à 17.

22. Moyen d'acquisition de documents, notamment d'images, **caractérisé en ce qu'**il comprend des moyens adaptés à mettre en oeuvre le procédé de découverte de périphériques conforme à l'une des revendications 1 à 9.

23. Moyen d'acquisition de documents, notamment d'images, **caractérisé en ce qu'**il comprend un dispositif de découverte de périphériques conforme à l'une des revendications 10 à 17.

24. Réseau de communication sans fil, **caractérisé en ce qu'**il comprend des moyens adaptés à mettre en oeuvre le procédé de découverte de périphériques conforme à l'une des revendications 1 à 9.

25. Réseau de communication sans fil, **caractérisé en ce qu'**il comprend un dispositif de découverte de périphériques conforme à l'une des revendications 10 à 17.

26. Réseau de communication filaire, **caractérisé en ce qu'**il comprend des moyens adaptés à mettre en oeuvre le procédé de découverte de périphériques conforme à l'une des revendications 1 à 9.

27. Réseau de communication filaire, **caractérisé en ce qu'**il comprend un dispositif de découverte de périphériques conforme à l'une des revendications 10 à 17.

28. Progiciel d'ordinateur, pouvant être chargé dans un ordinateur, **caractérisé en ce qu'**il comprend des portions de code logiciel adaptées à mettre en oeuvre le procédé de découverte de périphériques conforme à l'une des revendications 1 à 9, lorsque ledit progiciel d'ordinateur est exécuté sur un ordinateur.
